# EUROPEAN PATENT APPLICATION

(11) **EP 2 236 468 A1**
(43) Date of publication of application: **06.10.2010**
(21) Application number: 10158448.0
(22) Date of filing: 30.03.2010
(51) Int. Cl.: C03B 11/02, C03B 11/08, C03B 11/16, C03B 35/00

(54) **Glass molded article manufacturing system and glass molded article manufacturing method**

(30) Priority: 31.03.2009 JP 2009087786; 28.12.2009 JP 2009298186
(71) Applicant: Fujinon Corporation, Saitama-shi, Saitama (JP)
(72) Inventor: Yamanaka, Hajime, Saitama (JP); Sato, Yoshihiko, Saitama (JP); Watanabe, Seiichi, Kanagawa (JP)
(74) Representative: Klunker . Schmitt-Nilson . Hirsch

(57) **Abstract**

A glass molded article manufacturing system capable of controlling decrease in production efficiency resulting from a decline in the processing capability of one molding machine is provided in a direct press system. The manufacturing system has a glass gob molding machine which receives molten glass in a glass gob molding die to continuously mold a glass gob, and a press molding machine which press-molds the glass gob by a press molding die to continuously mold a glass molded article. The manufacturing system includes a buffer which stores the glass gob molded by the glass gob molding machine and enables the stored glass gob to be supplied to the press molding die, and a conveying means which switches the conveying path of the glass gob molded, and conveys the glass gob, between the glass gob molding machine, the press molding machine, and the glass gob storing machine.

## Description

### BACKGROUND

### 1. Technical Field

The present invention relates to a glass molded article manufacturing system and a glass molded article manufacturing method.

### 2. Related Art

There is known a glass molded article manufacturing method by a so-called direct press system which receives molten glass in a glass gob molding die to continuously mold the glass gob, conveys and press-molds the glass gob in a softened state to/in a press molding die, and continuously molds a glass molded article, such as an optical lens. In the direct press system, a step of molding a glass gob from molten glass and a step of press-molding the glass gob are performed continuously. Thus, the production efficiency of glass molded articles can be improved as compared to a reheat press system which heats and softens a pre-form to press-mold a glass molded article.

An example of the above-described related art is disclosed in JP-A-6-157051.

However, when the processing capability of one molding machine of the glass gob molding machine and the press molding machine for troubleshooting, etc. declines (including processing stop), the processing capability between the molding machines becomes out of balance, and generally, the processing capability of the other molding machine will also decline. Also, when the processing capabilities of both the molding machines decline, the production efficiency of the glass molded article by a direct press system will decrease. In particular, the press molding machine will frequently stop as compared to the glass gob molding machine, for the purpose of changes in molding conditions, etc. in addition to troubleshooting, etc.

### SUMMARY

Thus, the object of the invention is to provide a glass molded article manufacturing system and a glass molded article manufacturing method capable of controlling a decrease in production efficiency resulting from a decline in the processing capability of one molding machine, in a direct press system.

According to an aspect of the invention, there is provided a glass molded article manufacturing system having a glass gob molding machine which receives molten glass in a glass gob molding die to continuously mold a glass gob, and a press molding machine which press-molds the glass gob by a press molding die to continuously mold a glass molded article. The manufacturing system includes a glass gob storing machine which stores the glass gob molded by the glass gob molding machine and enables the stored glass gob to be supplied to the press molding die, and a conveying unit which switches a conveying path of the glass gob molded by the glass gob molding machine, and conveys the glass gob between the glass gob molding machine, the press molding machine, and the glass gob storing machine.

With this configuration, a decrease in the production efficiency resulting from a decline in the processing capability of one molding machine can be suppressed by conveying the glass gob via the glass gob storing machine.

The above glass molded article manufacturing system may further include a control unit which acquires processing capability information showing the processing capabilities of the glass gob molding machine and the press molding machine from the glass gob molding machine and the press molding machine, respectively, compares the information of both the processing capabilities, and controls the switching of the conveying path of the glass gob by the conveying unit, and the storing and supplying of the glass gob by the glass gob storing machine. Thereby, according to the processing capabilities of both the molding machines, the switching of the conveying path of the glass gob and the storing and supplying of the glass gob can be automatically controlled.

If the processing capability of the glass gob molding machine exceeds the processing capability of the press molding machine, the conveying unit may convey at least some of glass gobs molded by the glass gob molding machine to the glass gob storing machine. Thereby, even if the processing capability of the press molding machine declines, the glass gob can be contiguously molded without reducing the processing capability of the glass gob molding machine.

If the processing capability of the glass gob molding machine falls below the processing capability of the press molding machine, the conveying unit may convey the glass gob stored in the glass gob storing machine to the press molding die, in a state where the glass gob is kept warm or heated to a temperature suitable for press molding. Thereby, even if the processing capability of the glass gob molding machine declines, the glass molded article can be continuously molded without reducing the processing capability of the press molding machine.

If the processing capability of the glass gob molding machine falls below the processing capability of the press molding machine, the conveying unit may convey the glass gob stored in the glass gob storing machine to the glass gob molding die, and then convey the glass gob to the pressing molding die in a state where the glass gob is kept warm or heated to a temperature suitable for press molding. Thereby, even if the processing capability of the glass gob molding machine declines, the glass gob can be press-molded without reducing the processing capability of the press molding machine.

The processing capability information of the glass gob molding machine may include information showing the operational status of the glass gob molding machine, and the processing capability information of the press molding machine may include information showing the operational status of the press molding machine. Thereby, according to the operational statuses of both the molding machines, the switching of the conveying path of the glass gob and the storing and supplying of the glass gob can be automatically controlled.

The processing capability information of the glass gob molding machine may also include information showing the delivery timing of the glass gob by the glass gob molding machine. Thereby, even if the delivery timing of the glass gob changes, the switching of the conveying path of the glass gob, and the storing and supplying of the glass gob can be automatically controlled in synchronization with the delivery timing.

The glass gob storing machine may store the glass gob molded by molding machines other than the glass gob molding machine, and the conveying unit may switch the conveying path of the glass gob molded by other molding machines, and may convey the glass gob between the glass gob molding machine, the press molding machine, and the glass gob storing machine. Thereby, even if the processing capability of the glass gob molding machine declines, a decrease in production efficiency resulting from a decline in the processing capability of the glass gob molding machine can be suppressed.

According to another aspect of the invention, a glass molded article manufacturing method includes a glass gob molding step of receiving molten glass in a glass gob molding die to continuously mold a glass gob, and a press molding step of press-molding the glass gob by a press molding die to continuously mold a glass molded article. The manufacturing method further includes a glass gob storing step of storing the glass gob molded by the glass gob molding step and enabling the stored glass gob to be supplied to the press molding die, and a conveying step of switching a conveying path of the glass gob molded by the glass gob molding step, and conveying the glass gob between the glass gob molding machine, the press molding machine, and the glass gob storing machine.

With these steps, a decrease in production efficiency resulting from a decline in the processing capability of one molding step can be suppressed by conveying the glass gob so that the processing capabilities of both of the molding steps are balanced via the glass gob storing step.

As described above, according to the invention, it is possible to provide a glass molded article manufacturing system and a glass molded article manufacturing method capable of controlling a decrease in production efficiency resulting from a decline in the processing capability of one molding machine, in a direct press system.

### BRIEF DESCRIPTION OF THE DRAWINGS

Fig. 1 is a view showing the overall configuration of a molding system related to a first embodiment of the invention.
Fig. 2 is a view showing a configuration example of the molding system related to the first embodiment.
Fig. 3A is a view showing an operation method (at normal operation) of the molding system.
Fig. 3B is a view showing an operation method (at a decline in processing capability of the press molding machine) of the molding system.
Fig. 3C is a view showing an operation method (at a decline in processing capability of a glass gob molding machine) of the molding system.
Fig. 3D is a view showing an operation method (at a decline in processing capability of the glass gob molding machine) of the molding system.
Fig. 4 is a view showing a configuration example of a molding system related to a second embodiment.
Fig. 5A is a view showing an operation method (at normal operation) of the molding system.
Fig. 5B is a view showing an operation method (at a decline in processing capability of a glass gob molding machine) of the molding system.
Fig. 5C is a view showing an operation method (at a decline in processing capability of the glass gob molding machine) of the molding system.
Fig. 5D is a view showing an operation method (at a decline in processing capability of the glass gob molding machine) of the molding system.
Fig. 6 is a view showing the outline of a molding system related to a conventional technique.
Fig. 7 is a view showing an operation method (at normal operation) of the molding system related to the conventional technique.

### DESCRIPTION OF EXEMPLARY EMBODIMENTS

Hereinafter, preferred embodiments of the invention will be described in detail with reference to the accompanying drawings. In addition, in the present specification and drawings, duplicate description will be omitted by giving the same reference numerals to constituent elements having substantially the same functional configurations.

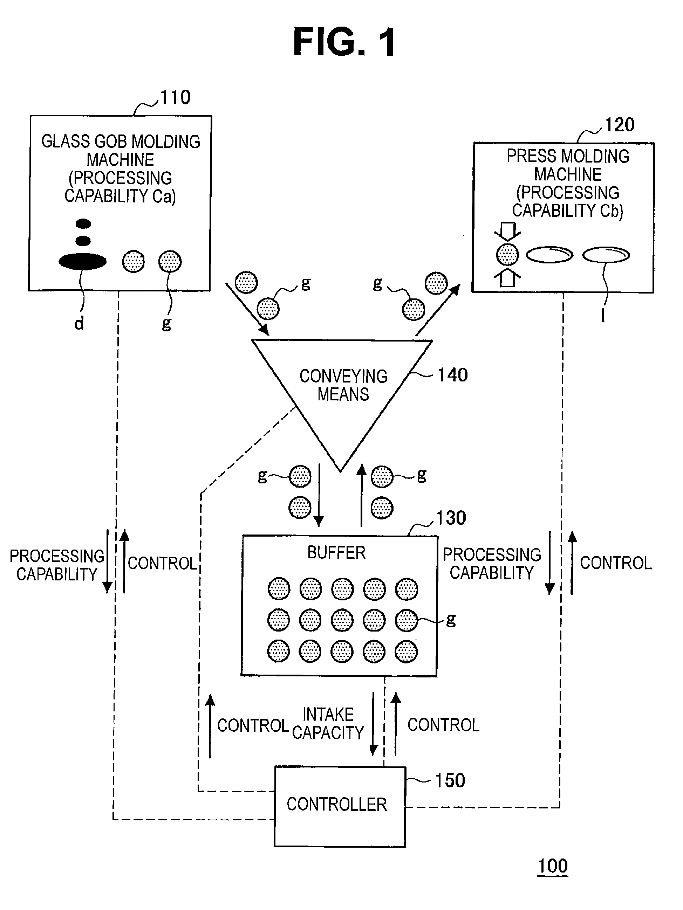

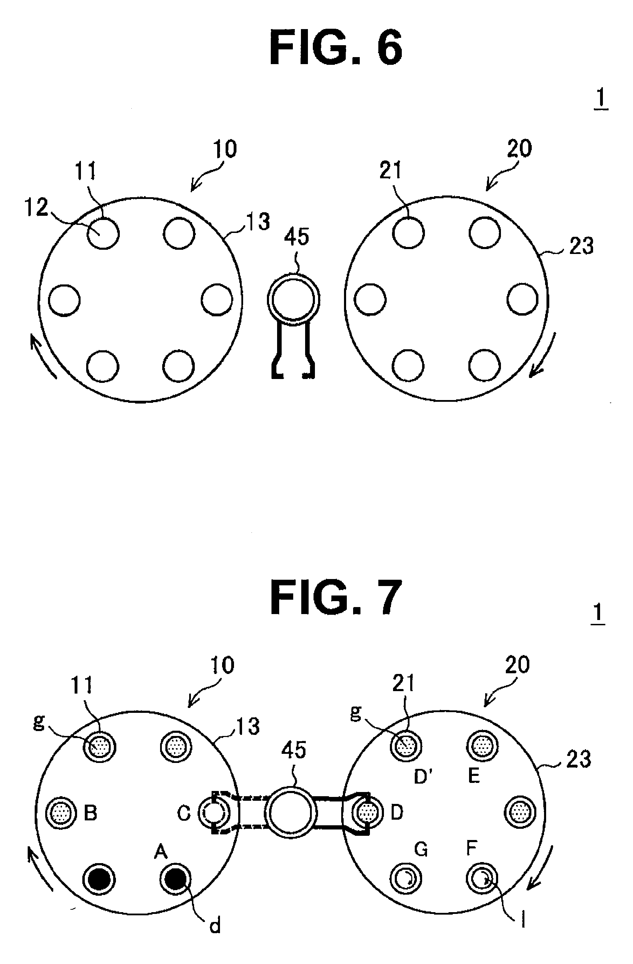

Hereinafter, after a glass molded article manufacturing system (hereinafter also referred to as a molding system) related to a conventional technique is described with reference to Figs. 6 and 7, a molding system related to an embodiment of the invention will be described with reference to Figs. 1 to 5.

### 1. Molding System 1 related to Conventional Technique

Figs. 6 and 7 are views respectively showing the outline and operation method of a molding system 1 related to the conventional technique. As shown in Fig. 6, the molding system 1 includes a glass gob molding machine 10, a press molding machine 20, a first handler 45, and a controller (not shown).

The glass gob molding machine 10 receives a molten glass d in a glass gob molding die 11 to continuously mold a glass gob g. The molten glass d is such that the glass flow which continuously flows out of an outflow pipe (not shown) is dropped with a predetermined weight, and is thereby supplied to the glass gob molding die 11. The glass gob molding die 11 has a receiving surface 12 provided with a coolant gas blow-off hole (not shown) through which coolant gas can be blown off upward. The molten glass d is cooled to a predetermined temperature and is molded as a glass gob g, in a state where the molten glass is floated in the air by the blow-off pressure of the coolant gas.

The press molding machine 20 press-molds the glass gob g by a press molding die 21, and continuously molds a glass molded article I. The press molding die 21 has an upper die and lower die (not shown) provided with die surfaces according to the molding shape of the glass molded article I. The glass gob g is press-molded with a predetermined press pressure and is cooled to a predetermined temperature, in a state where the glass gob is arranged between the upper die and the lower die, and is taken out of the press molding die 21 as the glass molded article I.

A predetermined number of glass gob molding dies 11 are arranged at equal intervals on a first turntable 13 of the glass gob molding machine 10. A predetermined number of press molding dies 21 are arranged at equal intervals on a second turntable 23 of the press molding machine 20. A first handler 45 conveys the glass gob g on the glass gob molding die 11 to the press molding die 21 according to intermittent rotational driving (hereinafter referred to as index driving) of the first and the second turntables 13 and 23. The first handler 45 has a handling mechanism capable of conveying the glass gob g at a temperature suitable for press molding, and is controlled by a controller.

The controller controls other respective parts of the molding system 1 pursuant to a program which is prepared in advance. The controller monitors the processing capabilities of the glass gob molding machine 10 and the press molding machine 20, and controls the processing capability of one molding machine according to the processing capability of the other molding machine.

As shown in Fig. 7, the molten glass d is supplied to the glass gob molding die 11 at a position A according to the index driving of the first turntable 13, and is cooled and molded as a glass gob g on the glass gob molding die 11 until the molten glass moves to a position B by the rotation of the first turntable 13. The glass gob g is conveyed to the press molding die 21 at a position D from the glass gob molding die 11 at a position C by the first handler 45 according to the index driving of the first and second turntables 13 and 23.

When the glass gob g moves to a position E by the rotation of the second turntable 23, the glass gob is press-molded with a predetermined press pressure by the press molding die 21, and is cooled on the press molding die 21 and molded as the glass molded article I until the glass gob reaches a position F. In addition, the glass gob g is arranged on the lower die of the press molding die 21 at the position D, and is then covered with the upper die, which results in die assembling.

Here, since the glass gob g is conveyed to the press molding die 21 at a temperature suitable for press molding, the glass gob is press-molded nearly without passing through a heating step. In addition, if a heating step is performed, a heating device may be provided at the position D or D' of the second turntable 23. When the glass molded article I moves to a position G, the glass molded article is taken out of the press molding die 21 by a take-out handler (not shown).

Here, respective steps from the supply of the molten glass d to the take-out of the glass molded article I are continuously performed according to the index driving of the first and second turntables 13 and 23 and the driving of the first handler 45. That is, a plurality of glass molded articles I is continuously molded from the molten glass d which is continuously supplied.

However, when the processing capability of one molding machine of the glass gob molding machine 10 and the press molding machine 20 declines due to troubleshooting, etc. (including processing stop), the processing capabilities between the molding machines become out of balance, and generally, the processing capability of the other molding machine will also decline. As the processing capabilities of both the molding machines decline, the production efficiency of the glass molded article I by a direct press system will decrease.

For example, in the press molding machine 20, the processing capability may decline due to the troubleshooting of a molding machine, the troubleshooting of a molding die, changes in molding conditions, etc. When the processing capability of the press molding machine 20 declines, the amount of glass gob g supplied to the press molding machine 20 exceeds the amount which can be actually processed, and the amount of supply of the glass gob g to the press molding machine 20 becomes excessive. In this case, the controller controls the processing capability of the glass gob molding machine 10 so that the processing capability declines (including processing stop), according to a decline in the processing capability of the press molding machine 20.

Similarly, when the processing capability of the glass gob molding machine 10 declines, the amount of supply of the glass gob g to the press molding machine 20 runs short. For this reason, the controller controls the processing capability of the press molding machine 20 so that the processing capability declines (including processing stop), according to a decline in the processing capability of the glass gob molding machine 10.

### 2. Molding System 100 related to First Embodiment

Fig. 1 is a view showing the overall configuration of a molding system 100 related to a first embodiment of the invention. As shown in Fig. 1, the molding system 100 includes a glass gob molding machine 110, a press molding machine 120, a buffer 130 (glass gob storing machine), a conveying means 140 (conveying unit), and a controller 150 (control unit).

The glass gob molding machine 110 continuously molds a glass gob g from molten glass d, and the press molding machine 120 press-molds the glass gob g to continuously mold a glass molded article I. The buffer 130 stores the glass gob g and enables the stored glass gob g to be supplied to the press molding machine 120. The conveying means 140 switches the conveying path of the glass gob g between the glass gob molding machine 110, the press molding machine 120, and the buffer 130, and conveys the glass gob therebetween.

The controller 150 controls the glass gob molding machine 110, the press molding machine 120, the buffer 130, and the conveying means 140. The controller 150 acquires information (processing capability information) showing processing capability from both the molding machines 110 and 120, and acquires information showing the intake capacity of the glass gob g from the buffer 130. The controller 150 creates control information for controlling respective parts of the molding system 100 on the basis of the information acquired from the respective parts, and supplies the control information to the respective parts. In particular, the controller 150 compares the processing capabilities of both the molding machines 110 and 120, switches the conveying path of the glass gob g by the conveying means 140, and controls the storing and supplying of the glass gob g by the buffer 130.

The processing capability information of both the molding machines 110 and 120 includes information showing the operational statuses of the respective molding machines 110 and 120. Here, the operational statuses of the respective molding machines 110 and 120 are expressed by, for example, the presence or absence of operation, and processing capability (the number of times of molding per unit time, etc.).

Additionally, the processing capability information of the glass gob molding machine 110 may also include information (delivery timing information) showing the delivery timing of the glass gob g by the glass gob molding machine 110. Here, if the glass gob g is molded using a molten glass flow which is dropped through an outflow pipe from a glass melting furnace (not shown), the drop speed of the molten glass d will change according to the amount of molten glass within the glass melting furnace, and the timing with which the glass gob g is delivered from the molding machine 110 will also change. The delivery timing information is utilized in order to synchronize the operation of the respective parts of the molding system 100 with the delivery timing of the glass gob g.

The controller 150 performs control operation, using software means, such as a program, and/or hardware means, such as a control circuit. Assuming that the processing capability of the glass gob molding machine 110 is Ca and the processing capability of the press molding machine 120 is Cb, the basic control operation by the controller 150 will be described. First, if Ca=Cb, the controller 150 controls the conveying means 140 so that the glass gob g continuously molded by the glass gob molding machine 110 is conveyed to the press molding machine 120.

On the other hand, if Ca>Cb, the controller 150 controls the conveying means 140 so that the portion of the glass gob g continuously molded by the glass gob molding machine 110, which is equivalent to the processing capability Cb of the press molding machine 120, is conveyed to the press molding machine 120. Additionally, the controller 150 controls the conveying means 140 and the buffer 130 so that the portion exceeding the processing capability Cb is conveyed to and stored in the buffer 130.

Similarly, if Ca<Cb, the controller 150 controls the conveying means 140 so that the glass gob g continuously molded by the glass gob molding machine 110 is conveyed to the press molding machine 120. Additionally, the controller 150 controls the buffer 130 and the conveying means 140 so that the portion exceeding the processing capability Ca is supplied from the buffer 130, and is conveyed to the press molding machine 120.

In addition, although the case where the glass gob g continuously molded by the glass gob molding machine 110 is press-molded has been described in the above control operation, the glass gob g molded in advance by the glass gob molding machine 110 or other molding machines may be press-molded. In this case, the glass gob g which is molded in advance is stored in the buffer 130, and is supplied to the press molding machine 120 from the buffer 130.

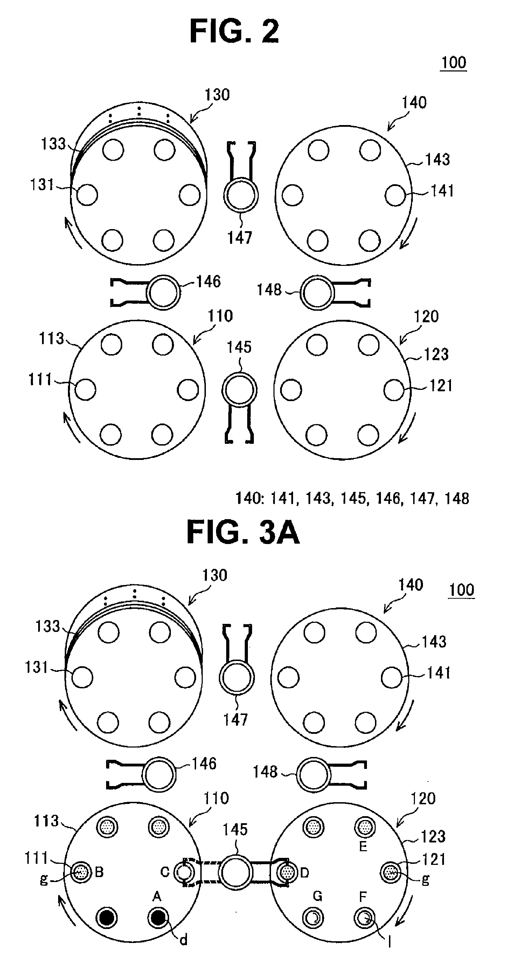

Fig. 2 is a view showing a configuration example of the molding system 100 related to the first embodiment. As shown in Fig. 2, the molding system 100 includes the glass gob molding machine 110, the press molding machine 120, the buffer 130, the conveying means 140, and the controller 150 (refer to Fig. 1). The glass gob molding machine 110 and the press molding machine 120 function similarly to the glass gob molding machine 10 and the press molding machine 20 related to the conventional technique.

In addition, although the case where a turntable is provided in each of the glass gob molding machine 110, the press molding machine 120, the buffer 130, and the conveying means 140 will be described below, an X-Y table, a band conveyor, etc. may be provided instead of the turntable. Here, it is desirable that the turntables provided in the glass gob molding machine 110, the press molding machine 120, the buffer 130, and the conveying means 140 are index-driven in synchronization with each other. Additionally, two or more turntables may be provided in each of the glass gob molding machine 110, the press molding machine 120, the buffer 130, and the conveying means 140.

The buffer 130 temporarily stores the glass gob g, which is conveyed to the press molding die 121 from the glass gob molding die 111, in a buffer frame 131. The buffer frame 131, which is a storing space which stores the glass gob g, may be provided with a heating device which keeps warm and heats the glass gob g to a temperature suitable for press molding. The buffer 130 is provided with a multi-stage type third turntable 133, and a predetermined number of buffer frames 131 are arranged at equal intervals in each stage. In addition, the intake capacity of the third turntable 133 is set so that the turntable stores, for example, about 200 to 2000 glass gobs g according to the degree of unbalance of the processing capabilities between the glass gob molding machine 110 and the press molding machine 120, and the continuous operation time required at the unbalance. In addition, the third turntable 133 may be constituted as a one-stage type turntable.

The conveying means 140 is constituted by a conveying frame 141, a fourth turntable 143, and first to fourth handlers 145, 146, 147, and 148. The conveying means 140 conveys the glass gob g stored in the buffer frame 131 to the press molding die 121 from the buffer frame 131 by using the conveying frame 141 in a state in which the glass gob is kept warm or heated to a temperature suitable for press molding.

The conveying frame 141 is a space where each glass gob g is arranged at the conveyance of the glass gob g. The conveying frame 141 keeps warm or heats the glass gob g to a temperature suitable for press molding by feedback-controlling heating devices, such as an infrared heater, on the basis of the detection value of a temperature sensor. In addition, the conveying frame 141 may not be provided with a heating device, if the glass gob g can be conveyed to the press molding die 121 at a temperature suitable for press molding by a heating device provided in the buffer 130.

A first handler 145 conveys the glass gob g on the glass gob molding die 111 to the press molding die 121, according to the index driving of the first and second turntables 113 and 123. The second handler 146 conveys the glass gob g to the buffer frame 131 from the glass gob molding die 111, according to the index driving of the first and third turntables 113 and 133. The second handler 146 conveys the glass gob g to the buffer frame 131 from the glass gob molding die 111, when the processing capability of the press molding machine 120 declines, and the amount of supply of the glass gob g to the press molding machine 120 becomes superfluous.

The third handler 147 conveys the glass gob g to the conveying frame 141 from the buffer frame 131, according to the index driving of the third and fourth turntables 133 and 143. The fourth handler 148 conveys the glass gob g to the press molding die 121 from the conveying frame 141, according to the index driving of the second and fourth turntables 123 and 143.

In addition, if the third turntable 133 is a multi-stage type, the second handler 146 and the third handler 147 have an elevating mechanism in order to convey the glass gob g from/to the buffer frame 131 arranged in each stage of the turntable 133, along with a rotating mechanism.

The controller 150 controls the respective parts of the molding system 100 pursuant to a program which is prepared in advance. The controller 150 monitors the processing capabilities of the glass gob molding machine 110 and the press molding machine 120, switches the conveying path of the glass gob g according to the difference between the processing capabilities of both the molding machines, and controls the storing and supplying of the glass gob g by the glass gob storing machine 130.

In an example shown in Fig. 2, six glass gob molding dies 111 are arranged on a first turntable 113, and six press molding dies 121 are arranged on a second turntable 123. Additionally, twenty four buffer frames (six buffer frames in each stage of one to four stages) 131 are arranged on a third turntable 133, and six conveying frames 141 are arranged on a fourth turntable 143. In addition, although the arrangement of the buffer frame 131 is schematically shown in Figs. 2 to 5, for example, about 200 to 2000 buffer frames 131 are arranged on the third turntable 133, according to actual specification. Here, the numbers of glass gob molding dies 111, press molding dies 121, buffer frames 131, and conveying frames 141 arranged on the first to fourth turntables 113, 123, 133, 143 are merely illustrative, and are set to arbitrary numbers (may be numbers which are different from each other).

Figs. 3A to 3D are views showing an operation method of the molding system 100.

As shown in Fig. 3A, at normal operation, the molten glass d is supplied to the glass gob molding die 111 at the position A, and is cooled and molded as the glass gob g until the molten glass reaches the position B. The glass gob g is conveyed to the press molding die 121 at the position D from the glass gob molding die 111 at the position C by the first handler 145. The glass gob g is press-molded when the glass gob moves to the position E, and is cooled and molded as the glass molded article I until the glass gob reaches the position F. When the glass molded article I moves to the position G, the glass molded article is taken out of the press molding die 121 by a take-out handler (not shown).

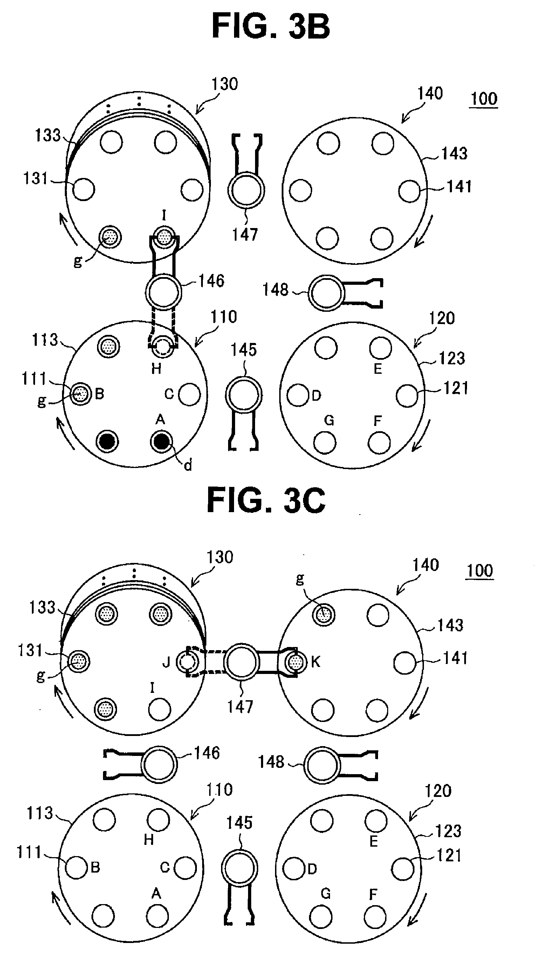

As shown in Fig. 3B, when the processing capability of the press molding machine 120 declines, the glass gob g molded from the molten glass d is conveyed to the buffer frame 131 at a position I (in the case of a multi-stage type turntable, two or more positions I will exist in a height direction) from the glass gob molding die 111 at a position H by a second handler 146). In addition, the position H may be set to other positions between the position B and the position C.

Here, when the processing of the press molding machine 120 stops, all the glass gobs g on the glass gob molding die 111 are conveyed to the buffer frame 131, according to the index driving of the first and third turntables 113 and 133. On the other hand, when the processing capability of the press molding machine 120 declines, the number of glass gobs g according to a decline in the processing capability are conveyed by the buffer frame 131. For example, in the case of a processing capability of 50%, when a certain glass gob g is conveyed to the press molding die 121 from the glass gob molding die 111, the next glass gob g is conveyed to the buffer frame 131 from the glass gob molding die 111. In addition, when the number of the glass gobs g stored in the buffer 130 reaches the storing upper limit number of the buffer 130, the controller 150 stops the processing of the glass gob molding machine 110.

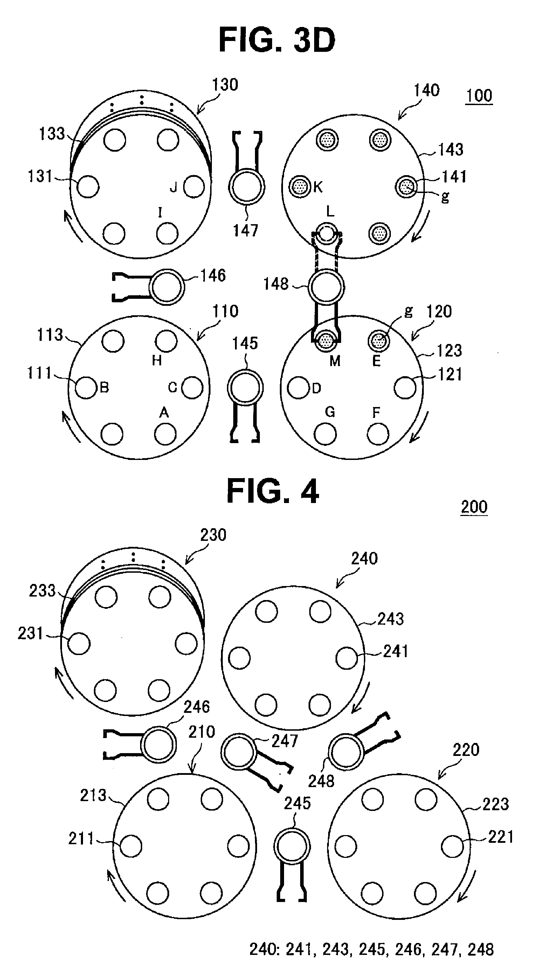

As shown in Fig. 3C, when the processing capability of the glass gob molding machine 110 declines, the glass gob g stored in the buffer 130 is conveyed to the conveying frame 141 at a position K from the buffer frame 131 at a position J by the third handler 147. Also, as shown in Fig. 3D, the glass gob g conveyed to the conveying frame 141 is kept warm and heated to a temperature suitable for press molding until the glass gob reaches a position L, and is conveyed to the press molding die 121 at a position M from the conveying frame 141 at the position L by the fourth handler 148. In addition, the position J may be set to other positions on the third turntable 133, the positions K and L may be set to other positions on the fourth turntable 143, and the position M may be set to other positions on the second turntable 123.

Here, when the processing of the glass gob molding machine 110 stops and all the glass gobs g on the glass gob molding die 111 are conveyed to the press molding die 121, the glass gob g conveyed to the press molding die 121 is conveyed to the press molding die 121 via the conveying frame 141 from the buffer frame 131 according to the index driving of the second to fourth turntables 123, 133, and 143. On the other hand, when the processing capability of the glass gob molding machine 110 declines, the number of glass gobs g according to a decline in the processing capability are conveyed to the press molding die 121 via the conveying frame 141 from the buffer frame 131. For example, when a certain glass gob g is conveyed to the press molding die 121 from the glass gob molding die 111 in the case of a processing capability of 50%, the next glass gob g is conveyed to the press molding die 121 from the buffer frame 131 via the conveying frame 141.

In addition, when the processing of the glass gob molding machine 110 stops, and the number of glass gobs g which are stored in the buffer 130 becomes 0, the controller 150 stops the processing of the press molding machine 120.

### 3. Molding System 200 related to Second Embodiment

Fig. 4 is a view showing a configuration example of a molding system 200 related to a second embodiment. In the molding system 100 related to the first embodiment, the case where the glass gob g is conveyed by the conveying means 140 between the buffer 130 and the press molding machine 120 has been described. On the other hand, in the molding system 200 related to the second embodiment, the glass gob g is conveyed by a conveying means 240 between a glass gob molding machine 210 and a press molding machine 220. The glass gob molding machine 210, the press molding machine 220, and the buffer 230 function similarly to the glass gob molding machine 110, the press molding machine 120, and the buffer 130 related to the first embodiment.

The conveying means 240 conveys the glass gob g stored in the buffer frame 231 to a press molding die 221 from a glass gob molding die 211 by using a conveying frame 241 in a state where the glass gob is kept warm and heated to a temperature suitable for press molding. The conveying means 240 is constituted by the conveying frame 241, a fourth turntable 243, and first to fourth handlers 245, 246, 247, and 248.

The first handler 245 conveys the glass gob g on the glass gob molding die 211 to the press molding die 221, according to the index driving of the first and second turntables 213 and 223. The second handler 246 conveys the glass gob g from the glass gob molding die 211 to the buffer frame 231, according to the index driving of the first and third turntables 213 and 233, and conveys the glass gob g from the buffer frame 231 to the glass gob molding die 211. In addition, the second handler 246 may be separately constituted as a handler which conveys the glass gob g from the glass gob molding dies 211 to the buffer frame 231, and a handler which conveys the glass gob g from the buffer frame 231 to the glass gob molding die 211.

The second handler 246 conveys the glass gob g to the buffer frame 231 from the glass gob molding die 211, when the processing capability of the press molding machine 220 declines, and the amount of supply of the glass gob g to the press molding machine 220 becomes superfluous. Additionally, when the processing capability of the glass gob molding machine 210 declines, and the amount of supply of glass gobs g to the press molding machine 220 runs short, the second handler 246 conveys the glass gob g to the glass gob molding die 211 from the buffer frame 231.

The third handler 247 conveys the glass gob g to the conveying frame 241 from the glass gob molding die 211, according to the index driving of the first and fourth turntables 213 and 243. The fourth handler 248 conveys the glass gob g to the press molding die 221 from the conveying frame 241, according to the index driving of the second and fourth turntables 223 and 243.

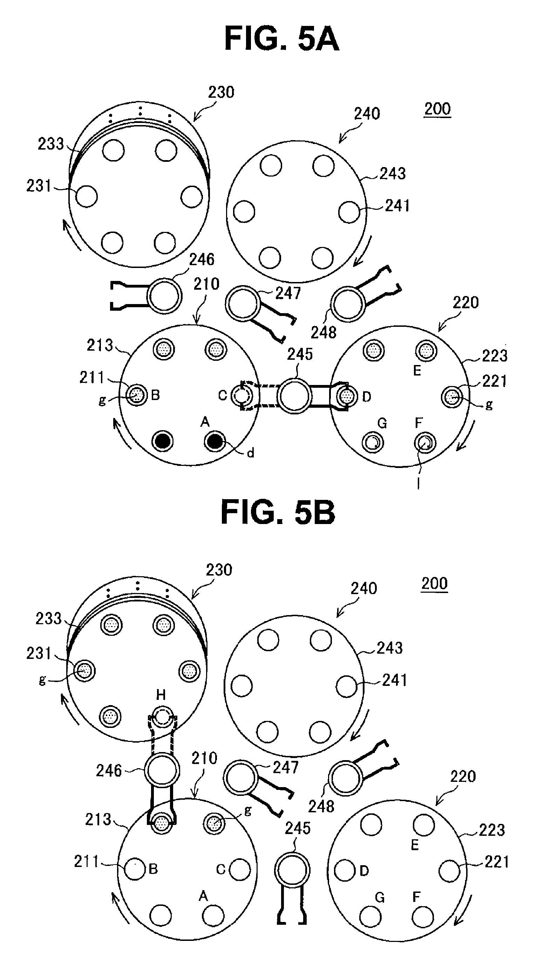

Figs. 5A to 5D are views showing an operation method of the molding system 200.

As shown in Fig. 5A, at normal operation, the molten glass d is supplied to the glass gob molding die 211 at the position A, and is cooled and molded as the glass gob g until the molten glass reaches the position B. The glass gob g is conveyed to the press molding die 221 at the position D from the glass gob molding die 211 at the position C by the first handler 245. The glass gob g is press-molded when the glass gob moves to the position E, and is cooled and molded as the glass molded article I until the glass gob reaches the position F. When the glass molded article I moves to the position G, the glass molded article is taken out of the press molding die 221 by a take-out handler (not shown).

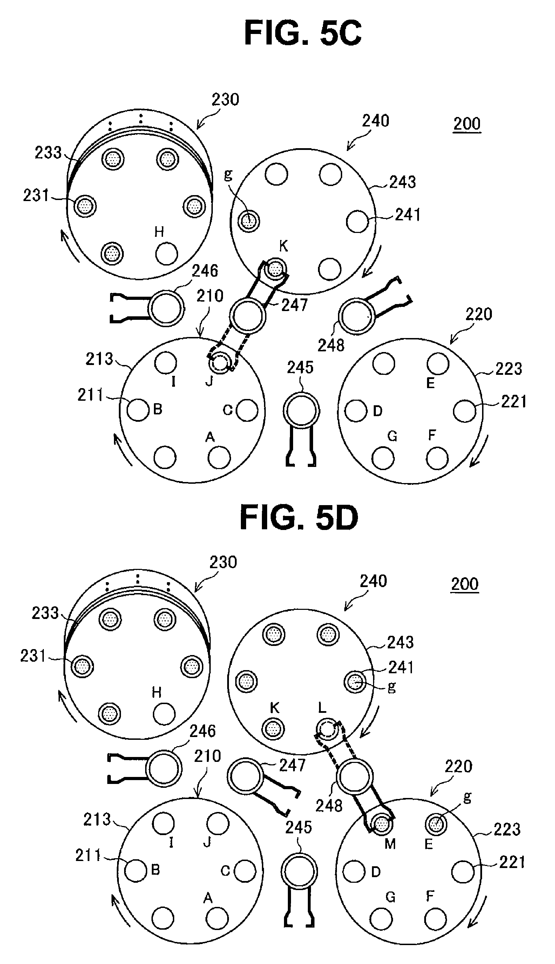

As shown in Fig. 5B, when the processing capability of the glass gob molding machine 210 declines, the glass gob g stored in the buffer 230 is conveyed to the glass gob molding die 211 at a position I from the buffer frame 231 at a position H by the second handler 246. Next, as shown in Fig. 5C, the glass gob g conveyed to the glass gob molding die 211 is conveyed to the conveying frame 241 at the position K from the glass gob molding die 211 at the position J by the third handler 247. Also, as shown in Fig. 5D, the glass gob g conveyed to the conveying frame 241 is kept warm and heated to a temperature suitable for press molding until the glass gob reaches the position L, and is conveyed to the press molding die 221 at the position M from the conveying frame 241 at the position L by the fourth handler 248.

In addition, the position H may be set to other positions on the third turntable 233, and the positions I and J may be set to other positions on the first turntable 213. Additionally, the positions K and L may be set to other positions on the fourth turntable 243, and the position M may be set to other positions on the second turntable 223.

Here, when the processing of the glass gob molding machine 210 stops and all the glass gobs g on the glass gob molding die 211 are conveyed to the press molding die 221, the glass gob g conveyed to the press molding die 221 is conveyed to the press molding die 221 via the glass gob molding die 211 from the buffer frame 231 according to the index driving of the second to fourth turntables 223, 233, and 243. On the other hand, when the processing capability of the glass gob molding machine 210 declines, the number of glass gobs g according to a decline in the processing capability are conveyed to the press molding die 221 via the glass gob molding die 211 and the conveying frame 241 from the buffer frame 231. For example, when a certain glass gob g is conveyed to the press molding die 221 from the glass gob molding die 211 in the case of a processing capability of 50%, the next glass gob g is conveyed to the press molding die 221 via the glass gob molding die 211 and the conveying frame 241 from the buffer frame 231.

In addition, when the processing of the glass gob molding machine 210 stops, and the number of glass gobs g which are stored in the buffer 230 becomes 0, the controller (not shown) stops the processing of the press molding machine 220.

Here, glass gobs g stored in the buffer 230 and glass gobs g which are not stored in the buffer may be mixed on the first turntable 213. In this case, the relationship between the index driving of the first and third turntables 213 and 233 and the sorting of the glass gob g may be stored, and according to the sorting of the glass gob g on the glass gob molding die 211 at the position C or J, a conveyance destination (the press molding die 221 or conveying frame 241) of the glass gob g may be determined, and the first handler 245 or third handler 247 may be controlled. Otherwise, the temperature of the glass gob g on the glass gob molding die 211 at the position C or J may be detected, the sorting of the glass gob g may be determined according to a detection result, and the first handler 245 or third handler 247 may be controlled.

### 4. Conclusion

As described above, with the glass molded article manufacturing system according to the embodiments of the invention, a decrease in production efficiency resulting from a decline in the processing capability of one molding machine can be suppressed by conveying the glass gob g via the glass gob storing machines 130 and 230. Consequently, in a direct press system, a decrease in production efficiency resulting from a decline in the processing capability of one molding machine can be suppressed.

Although the preferred embodiments of the invention have been described above with reference to the accompanying drawings, the invention is not limited to these embodiments. It is apparent to those who have the ordinary knowledge in the field of the technique to which the invention pertains that various alterations or modifications can be made within the category of the technical idea set forth in the claims, and it will be understood that these alterations or modifications naturally belong to the technical scope of the invention.

## Claims

1. A glass molded article manufacturing system having a glass gob molding machine which receives molten glass in a glass gob molding die to continuously mold a glass gob, and a press molding machine which press-molds the glass gob by a press molding die to continuously mold a glass molded article, the manufacturing system comprising:
a glass gob storing machine which stores the glass gob molded by the glass gob molding machine and enables the stored glass gob to be supplied to the press molding die; and
a conveying unit which switches a conveying path of the glass gob molded by the glass gob molding machine, and conveys the glass gob, between the glass gob molding machine, the press molding machine, and the glass gob storing machine.

2. The glass molded article manufacturing system according to Claim 1 **characterized by** further comprising a control unit which acquires processing capability information showing the processing capabilities of the glass gob molding machine and the press molding machine from the glass gob molding machine and the press molding machine, respectively, compares the information of both the processing capabilities, and controls the switching of the conveying path of the glass gob by the conveying unit, and the storing and supplying of the glass gob by the glass gob storing machine.

3. The glass molded article manufacturing system according to Claim 1 or 2 **characterized in that** if the processing capability of the glass gob molding machine exceeds the processing capability of the press molding machine, the conveying unit conveys at least some of glass gobs molded by the glass gob molding machine to the glass gob storing machine.

4. The glass molded article manufacturing system according to any one of Claims 1 to 3 **characterized in that** if the processing capability of the glass gob molding machine falls below the processing capability of the press molding machine, the conveying unit conveys the glass gob stored in the glass gob storing machine to the press molding die, in a state where the glass gob is kept warm or heated to a temperature suitable for press molding.

5. The glass molded article manufacturing system according to any one of Claims 1 to 4 **characterized in that** if the processing capability of the glass gob molding machine falls below the processing capability of the press molding machine, the conveying unit conveys the glass gob stored in the glass gob storing machine to the glass gob molding die, and then conveys the glass gob to the press molding die in a state where the glass gob is kept warm or heated to a temperature suitable for press molding.

6. The glass molded article manufacturing system according to Claim 2 **characterized in that** the processing capability information of the glass gob molding machine includes information showing the operational status of the glass gob molding machine, and the processing capability information of the press molding machine includes information showing the operational status of the press molding machine.

7. The glass molded article manufacturing system according to Claim 2 **characterized in that** the processing capability information of the glass gob molding machine includes information showing the delivery timing of the glass gob by the glass gob molding machine.

8. The glass molded article manufacturing system according to Claim 1 **characterized in that**
the glass gob storing machine stores the glass gob molded by molding machines other than the glass gob molding machine, and
the conveying unit switches the conveying path of the glass gob molded by other molding machines, and conveys the glass gob between the glass gob molding machine, the press molding machine, and the glass gob storing machine.

9. A glass molded article manufacturing method having a glass gob molding step of receiving molten glass in a glass gob molding die to continuously mold a glass gob, and a press molding step of press-molding the glass gob by a press molding die to continuously mold a glass molded article, the manufacturing method comprising the steps of:
storing the glass gob molded by the glass gob molding step and enabling the stored glass gob to be supplied to the press molding die; and
switching a conveying path of the glass gob molded by the glass gob molding step, and conveying the glass gob between the glass gob molding machine, the press molding machine, and the glass gob storing machine.

10. The glass molded article manufacturing method according to Claim 9 **characterized by** further comprising a step of acquiring processing capability information showing the processing capabilities of the glass gob molding step and the press molding step, respectively, comparing the information of both the processing capabilities, and controlling the switching of the conveying path of the glass gob by the conveying unit, and the storing and supplying of the glass gob by the glass gob storing step.
